(19)

Europäisches Patentamt
European Patent Office
Office européen des brevets

(11) **EP 1 628 408 B1**

(12) **EUROPEAN PATENT SPECIFICATION**

(45) Date of publication and mention
of the grant of the patent:
**29.05.2013   Bulletin 2013/22**

(51) Int Cl.:
**H04B 1/69** *(2011.01)*

(21) Application number: **05107696.6**

(22) Date of filing: **22.08.2005**

(54) **Device and method for ultra wide band communications**

Vorrichtung und Verfahren zur Ultrabreitbandkommunikation

Dispositif et procédé pour communications à bande ultra-large

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **20.08.2004 US 603128
11.02.2005 EP 05447023
04.04.2005 EP 05447075**

(43) Date of publication of application:
**22.02.2006   Bulletin 2006/08**

(73) Proprietor: **IMEC
3001 Leuven (BE)**

(72) Inventor: **Ryckaert, Julien
B-3080, Tervuren (Vossem) (BE)**

(74) Representative: **Sarlet, Steven Renaat Irène et al
Gevers
Intellectual Property House
Holidaystraat 5
1831 Diegem (BE)**

(56) References cited:
**WO-A-01/97396          US-A1- 2002 039 078
US-A1- 2003 128 783**

- ZHUANG W ET AL: "Ultra-wideband wireless communications" WIRELESS COMMUNICATIONS AND MOBILE COMPUTING WILEY UK, vol. 3, no. 6, September 2003 (2003-09), pages 663-685, XP002327111 ISSN: 1530-8669
- WIN M Z ET AL: "ULTRA-WIDE BANDWIDTH TIME-HOPPING SPREAD-SPECTRUM IMPULSE RADIO FORWIRELESS MULTIPLE-ACCESS COMMUNICATIONS" IEEE TRANSACTIONS ON COMMUNICATIONS, IEEE INC. NEW YORK, US, vol. 48, no. 4, April 2000 (2000-04), pages 679-691, XP000932191 ISSN: 0090-6778
- BORYSSENKO A O ET AL: "Efficient and practical pulses for dipole antenna UWB link" ANTENNAS AND PROPAGATION SOCIETY SYMPOSIUM, 2004. IEEE MONTEREY, CA, USA JUNE 20-25, 2004, PISCATAWAY, NJ, USA,IEEE, vol. 2, 20 June 2004 (2004-06-20), pages 1283-1286, XP010721574 ISBN: 0-7803-8302-8
- KASAMATSU A ET AL: "Overview of experimental device implementation in CRL UWB R&D consortium" ULTRA WIDEBAND SYSTEMS, 2004. JOINT WITH CONFERENCE ON ULTRAWIDEBAND SYSTEMS AND TECHNOLOGIES. JOINT UWBST & IWUWBS. 2004 INTERNATIONAL WORKSHOP ON KYOTO, JAPAN MAY 18-21, 2004, PISCATAWAY, NJ, USA, IEEE, 18 May 2004 (2004-05-18), pages 241-247, XP010716250 ISBN: 0-7803-8373-7

EP 1 628 408 B1

## Description

The present invention relates to Ultra-WideBand (UWB) communications, and more especially impulse-based UWB systems (also called IR-UWB for Impulse Radio).

Traditional approaches use specialized circuits to generate UWB pulses. More precisely, traditional IR-UWB systems rely on specific components such as step-recovery diodes or external inductor coils: a current discharge through such components generate a pulse, directly in the RF (Radio Frequency) domain, which is sent through the air as it is, after some filtering from the antenna or other components inserted in the chain.

This traditional approach has the disadvantage that only a fixed type of pulse can be generated.

Degiang Wang et al. have disclosed in "Performance Comparison of Two Kinds of UWB Rake Receiver", Emerging Technologies: Frontiers of Mobile and Wireless Communication, 2004, Proceedings of the IEEE 6th Circuits and Systems Symposium on Shanghai, China May 31-June 2, 2004 (31-05-2004), Piscataway, NJ, USA, IEEE, pages 329-332, signals used for ultra wide band communications wherein the signal is constructed by up-converting a base-band signal with a carrier frequency.

Boryssenko A. et al. have disclosed in "Efficient and practical pulses for dipole antenna UWB link", Antennas and Propagation Society Symposium, 2004, IEEE Monterey, CA, USA, June 20-25, 2004, Piscataway, NJ, USA, IEEE, vol. 2, 20 June 2004, pages 1283-1286 a low-complexity antenna/circuitry co-design in which waveforms are designed in function of the antenna characteristics.

It is an aim of this invention to provide a method for generating an UWB communications signal by upconversion of a baseband signal making use of low complex circuitry.

This aim is achieved with the method showing the technical steps of claim 1.

The invention combines baseband signal processing and up-/downconversion in the field of UWB communications. On transmitter side, a piecewise linear ultra-wideband baseband signal is generated, which is then upconverted to the RF domain by mixing with a carrier tone of the desired RF frequency. The piecewise linear ultra-wideband baseband signal is a signal comprising at least one pulse.

With "piecewise linear" is meant that the graph of the signal is a sequence of substantially linear parts. An alternative definition could be that the first derivative of the graph of the signal is non-smooth.

With ultra-wideband signals is meant, according to FCC regulations, signals having a bandwidth of at least 20% of the centre frequency or at least 500 MHz and a centre frequency between 3 and 10 GHz. The 5-6 GHz band may be excluded in practice, since it is taken up by WLAN communication.

By splitting the baseband signal from the RF domain, a much higher flexibility can be achieved in the system. The shape of the pulse, thereby its bandwidth, and the central frequency around which it will be placed in the spectrum can be separately adapted from each other. These parameters can be tuned separately on the final circuit. This is not true for traditional IR-UWB systems, which can only produce a fixed type of pulse. As an example, a pulser can be made allowing separate tuning of bandwidth from 500 MHz to 2 GHz, and central frequency from 3 GHz to 5 GHz.

In the method for generating an ultra-wideband communications signal according to the invention, the carrier tone is preferably generated by means of an oscillator which is switched off in between two pulses. In this way, power consumption can be minimised. The oscillator is preferably a ring oscillator because of its fast start-up.

The pulse or envelope which is used for the baseband signal is of triangular form

Based on this concept, the pulser (central part of the transmitter) comprises the following blocks: an oscillator responsible for generating the carrier tone of the desired centre frequency, a signal generator for generating the piecewise linear ultra-wideband baseband signal (herein also called baseband envelope), and a mixer for upconverting the baseband signal to the RF domain by means of the carrier tone. <u>By means of a pulse shaping circuit, the shape of the pulse is tuned.</u>

The signal generator may for example comprise a pulse position modulator for pulse-position modulation. In order to reduce the power consumption of the circuit in very low-duty-cycle IR-UWB (more time is spent between pulses than during pulses), a fast-start-up ring oscillator is used, which is started and stopped for each pulse, using a special biasing to speed-up its starting phase. The oscillator output is then mixed with the envelope (the baseband signal with discrete pulses) for upconversion to the RF domain.

Other modulation techniques known in the art may however also be employed, such as for example differential binary phase-shift keying (BPSK) modulation, which is possible thanks to a technique used to increase the startup time of the ring oscillator. By creating an inbalance inside the ring oscillator circuit, its startup is enforced with an initial condition. If the imbalance is inverted the oscillator will startup in the exact opposite phase. Differential phase modulation (BPSK) can then be done by choosing the sign of the imbalance depending on the inputted data signal.

Moreover, the pulser of the invention can be more easily integrated in standard technology. Specific external or exotic components are not required, so that the pulser can be integrated in plain digital CMOS without external components.

On receiver side, a received UWB communications signal in the RF domain is interpreted as follows for retrieving the original data signal. A plurality of local signal templates is generated in synchronisation with and having substantially the same centre frequency as the received signal. The received UWB communications signal is then correlated with the templates, which are phase-shifted with respect to each other, in the analog domain, and the data signal is retrieved by sampling the output of the correlators. The correlation in the analog domain has the advantage that digital operations for retrieving the data signal are relaxed due to the lower speed of operation.

Furthermore, a more simple synchronization on the envelope can be achieved, which is sufficient for non-coherent orthogonal (PPM) modulations, while other systems have to synchronize on the full RF pulse. The required accuracy is largely reduced in the case of the invention, which can make a big difference as synchronization is known to be a bottle-neck in UWB systems.

The correlation preferably comprises the mixing of both signals and the integration of the mixed signal. However, other correlation techniques known to the person skilled in the art may also be used.

The signal templates are preferably generated by switching a ring oscillator on and off, in synchronisation with the received UWB telecommunications signal. This has the advantage of being easy to implement, while energy loss as a result of a possible synchronisation error is kept at a minimum. The signal templates may however also be implemented in other ways, such as for example in a similar way as the pulse generation on the transmitter side in case a strong correlation overlap is desired.

In a preferred embodiment, two phase-shifted local signal templates are generated, the phase shift between the two being maintained at substantially 90°. This leads to a correlation in quadrature, which relaxes the timing constraints on the local signal templates. In another preferred embodiment, three branches are used, which enables the correlation by means of three signal templates with 120° phase offset between them. This is similar to the quadrature correlation. Furthermore, the interpretation can be based on any number of branches with any phase shift between the local signal templates.

In both the above described cases, the detection can be based on non-coherent envelope detection if an orthogonal modulation such as Pulse Position Modulation (PPM) is used, combining the energy of the two/three branches, or coherent detection if BPSK modulation is used, coherently recombining the two/three phases. This choice is not as easy for traditional (non carrier-based) IR-UWB systems: the best option for them is to convert everything to the digital domain where the processing takes place, but this leads to a much higher power consumption due to high-speed ADCs and heavy digital processing.

Based on the above described concept of interpretation of a received UWB communications signal , a suitable receiver comprises the following blocks: a signal generator for generating the plurality of signal template, a timing circuit acting on the signal generator for synchronisation, a plurality of analog correlators (one per template) for correlating the UWB communications signal with the signal templates, and (digital) interpretation means (e.g. a baseband detection circuit) for finally deriving a data signal. The receiver may also comprise further blocks if needed.

Like the pulser on transmitter side, the "interpreter" on receiver side can also be implemented in CMOS, at least in advanced technology nodes like 65 nm.

Each of the analog correlators preferably comprises a mixer having as inputs the received UWB communications signal and one of the signal templates, and an analog integrator downstream of the mixer. The signal generator preferably comprises a ring oscillator, which is switched on and off by the timing circuit. In case of quadrature correlation, the receiver preferably comprises two analog correlators and a phase shifter which generates a second signal template by phase-shifting a first signal template over substantially 90°. In the case of three-branch correlation, the receiver preferably comprises three analog correlators and phase shifting means for maintaining the phase shift between three signal templates at approximately 120°. As mentioned above, a different number of branches and different phase shifts between the signal templates are also possible.

It is further an aspect of the invention to realize the need for precise timing generation and to propose a solution, re-usable in the various parts of an UWB transmitter and an UWB receiver.

The problem to solve here is to present a precise timing generation solution for generation timings in a range which can hardly be realized via the classical digital solution (chain of many invertors) (required timing is too long) but can also not be realized by typical analog circuits, offering timings which are too short. Furthermore it is desirable that the solution be suited for CMOS implementation and consume not too much power. The precise timing generation is realized in the invention by an arrangement of a current source, a first capacitor and a comparator.

In an embodiment of the invention a pulse position modulating circuit is provided, using said precise timing generation mechanism, by providing a second capacitor, switchable with said first capacitor, in accordance with the input data of said PPM circuit.

According to the invention a pulse shaping circuit is provided, using said precise timing generation mechanism, by providing means to charge and discharge said first capacitor by feeding back the output of said comparator.

In an embodiment of the invention an oscillator activation circuit is provided, based on essentially the same principle as said pulse position modulating circuit. In a device where both said pulse shaping circuit and said oscillator activation circuit are present a fixed relationship between the current sources of said circuits is set.

The invention will be further elucidated by means of the following description and the following drawings:

Figure 1 is a graph depicting spectrum specification definitions;
Figure 2 is a graph depicting spectrum requirements of UWB devices due to regulations;
Figure 3 is a block diagram of a UWB transmitter architecture, according to an example;
Figure 4 is a circuit diagram of a timing generation circuit, according to an example;
Figure 5 is a circuit diagram of a pulse position modulator, according to an example;
Figure 6 is a graph depicting simulation results of the operation of the pulse position modulator depicted in Figure 5;
Figure 7 is a circuit diagram of a pulse shaping circuit, according to an example;
Figure 8 is a graph depicting simulation results of the operation of the pulse shaping circuit depicted in Figure 7;
Figure 9 is a graph depicting simulation results on the ring activation circuit; Figure 10 is a circuit diagram of a mixer circuit, according to an example;
Figure 11 is a graph depicting simulation results of the operation of the ring oscillator;
Figure 12 is a graph depicting tunability of the ring oscillator, according to an example;
Figure 13 is a circuit diagram of a UWB receiver, according to an example;
Figure 14 is a graph depicting drift between received UWB signal and signal template; and
Figure 15 is a circuit diagram of a UWB quadrature receiver, according to an example.

The UWB technology is a potential solution for an ultra-low power implementation of a wireless communication. Indeed, the heavy duty cycle nature of the signals brings the opportunity to turn most of the system off between the UWB pulses. The energy consumption is calculated referring to the transmission of a single pulse. Since several pulses are required to transmit one bit of information, the energy per bit is then given by the number of pulses *(Nppb)* required for one bit times the energy per pulse *(Epp)*. This last quantity will then be an important specification for the UWB pulser, the former being more related to the link budget calculations. As an example, if 100 pulses are required to transmit one bit of information, and the targeted energy per bit is 10nJ per bit, the targeted energy consumption per pulse is then 100pJ per pulse. Of course, between the pulses, there is also some energy consumption (standby power: *Pstby)* that needs to be taken into account in the final calculation.

Some other parameters are related to the signal itself. First of all, the instantaneous power, directly related to the amplitude (*Ap*) of the pulse is defined as the output power *(Pout)*. We then define:

$$P_{out}[dBm] = 10\log\left( \frac{A_p^2}{2.50} \cdot \frac{1}{1mW} \right)$$

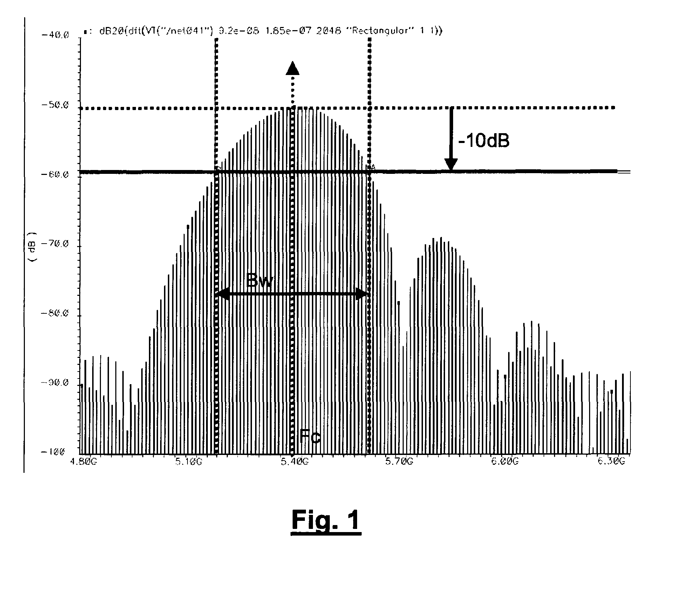

This quantity will be used in the link budget calculation. Another parameter is the bandwidth *(Bw)* of the pulses. This quantity is defined by the -10dB points referred to the maximum point in the spectrum of the signal. This is shown in figure 1.

The system is based on modulated pulses. The bandwidth of the pulses is then centered around a carrier frequency (*Fc*) defined as the middle point of the bandwidth. Note that this carrier frequency is usually different from the maximum frequency inside this bandwidth.

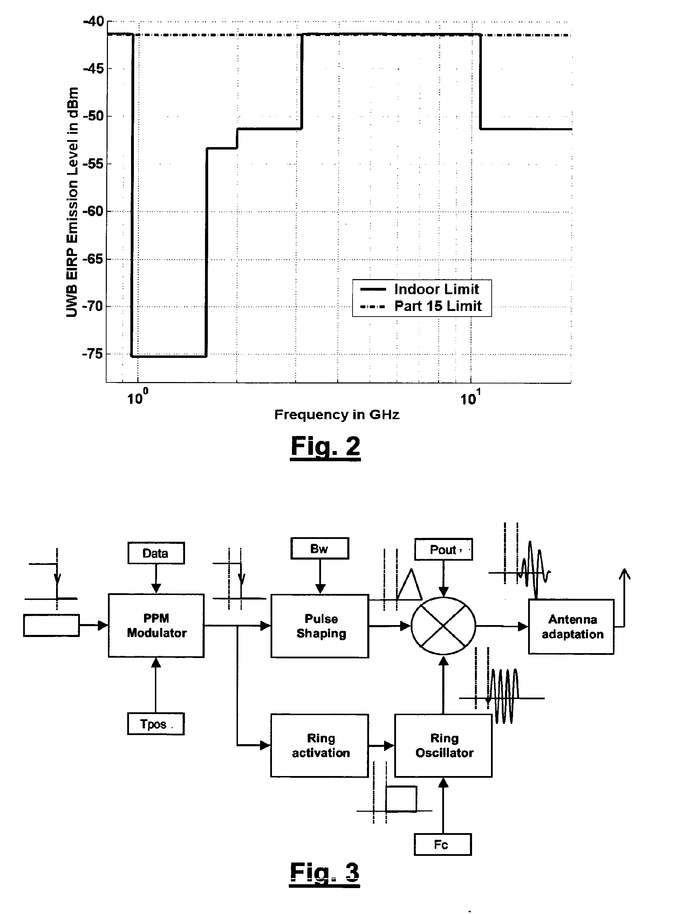

The FCC regulation in the US has allowed UWB communication to operate under precise conditions. Other regulation bodies in the world are still evaluating the impact of UWB systems on other existing communication systems. The FCC rules will then be our starting point for the definition of our system. According to the FCC, an UWB signal is defined as a signal for which its -10dB bandwidth (see the above definition) is higher or equal to 20% of its center frequency or a signal for which its -10dB bandwidth is higher or equal to 500MHz. Since in average the UWB power should not harm other existing communication system, a maximum average power spectral density is defined as -41dBm/MHz. To avoid interference with the low power signals of GPS systems, a lower spectral density is defined for the signal below 3.1GHz. The spectrum mask is given on figure 2.

However, if we limit UWB operation between 3.1GHz and 10.6GHz, this frequency band overlaps with a strong communication standard in the ISM band between 5GHz and 6GHz, namely the IEEE 802.11a WLAN standard. This communication system will most likely operate in the same environments as our application meaning that strong interferences are to be expected. In order to prevent such interferences (from as well as to the 5GHz WLAN), we will try to avoid operation between 5GHz and 6GHz. Given the technology of our design, 0.18um CMOS, it appears very difficult if not impossible to operate at low power consumption between 6GHz and 10GHz. We will then restrict this version of our system to an operation between 3.1GHz and 5GHz.

As mentioned earlier, a minimum bandwidth of 500MHz is required for an UWB signal. This means that multiband operation is possible between 3.1GHz and 5GH and. four bands can be defined for multiple access. However, since no PHY layer has been defined yet for low-power UWB communication, we will still provide a tunability for the bandwidth and signals of 2GHz bandwidth between 3 and 5GHz should be made possible in our system.

The pulse rate is a power consumption compromise between pulse duty cycling and clock generation power. High clock rates allow a lower output power, thus a lower power consumption, but high clock power consumption, whereas lower clock rates result in higher output power but lower clock consumption. First estimates of the optimum pulse rates result in a clock rate around a few tens of MHz. The optimum pulse rate is preferably around a few tens of MHz. The pulse rate is preferably tunable around a predetermined value. The pulse repetition time *(Trep)* is the inverse of the clock rate (= pulse rate). A typical value of the pulse repetition time is then in the order of 100ns.

A periodic signal gives rises to spikes in the spectrum resulting in an infringement of the FCC rule. Some randomization in the repetition of the pulses should then be implemented to smoothen these spikes. Pulse position modulation is shown to be the most efficient mean to smoothen the spectrum. Since its implementation does not seem too complex, this modulation approach is then chosen.

The pulse position *(Tpos)* relative to a precise clocking instant defines the value of the data information. The specification for this value results from the detection method used in the receiver. For the detection to be optimal, both position of the pulses should not overlap. The longest pulse duration being that for the 500MHz bandwidth, that is in the order of 2-4ns depending on the pulse shape. Twice this value will then guaranty non overlapping symbols. A maximum for the pulse position modulation time, is given by half the repetition time **(Trep/2~50ns)** in order to distinguish a symbol from the next one.

The output power required is related to the pulse repetition rate. Indeed, since the FCC regulation restricts the average output power, increasing the pulse rate results in a lower pulse output power. The calculations of output power result from link budget analysis. These have been roughly done resulting in a required output power of around 0dBm.

The state of the art for low power communication system for similar applications is 10nJ/bit. A target of 1 nJ/bit seems possible with UWB and would improve state of the art by an order of magnitude demonstrating the low power capabilities of UWB. The standby power is for UWB communication an important parameter to reduce as much as possible.

In summary, the pulser specifications of a preferred embodiment are given in the following table:

| Parameter | | Specification |
|---|---|---|
| Frequency range | *Fc* | 3GHz - 5GHz |
| Bandwidth | *Bw* | 500MHz - 2GHz |
| Pulse repetition time | *Trep* | > 50ns |
| Modulation type | | Pulse position |
| PPM timing position | *Tpos* | 4ns - 25ns |
| Output power | *Pout* | 0dBm |
| Energy consumption per pulse | *Epp* | 10pJ |
| Standby power | *Pstby* | <<< |

The system is thus designed for transferring digital data into position-modulated pulses with a tunable bandwidth of at least 500MHz centered on a carrier between 3GHz and 5GHz. A block diagram showing the principle of operation is depicted on figure 3.

The architecture is subdivided into 5 basic functions. The PPM modulator enables the rest of the blocks at a variable time instant with respect to a clock instant. This enable signal activates two blocks. First the pulse shaping, creating an envelope for the pulse, which in this implementation is a triangle with a tunable duration. This signal also activates a circuit creating a ring activation signal, which is a signal required to turn on and off the ring oscillator. Then there is the ring oscillator block itself for which the center frequency is tunable. A ring is used here for its fast startup time and since phase noise is not an important requirement in our system. Both the oscillating signal and the triangular pulse are then feeding a mixer providing an upconversion of the triangle shape to the center frequency defined by the ring. Finally an antenna adaptation block provides the interface with the antenna. Requirements for this block are differential to single-ended conversion, impedance adaptation, filtering...

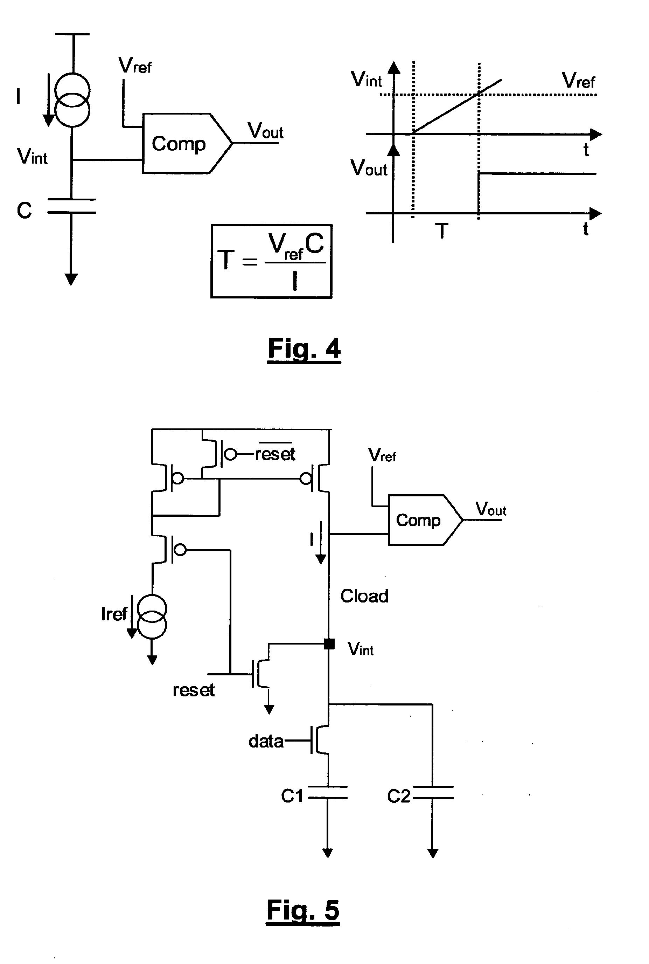

As will be seen later, most of the blocks are based on a precise timing generation. The idea is to generate a timing by integrating charges into a defined capacitor and comparing the resulting voltage over the capacitor to a reference voltage. This operation is simply done using an integrator and a comparator. The circuit is shown on figure 4. This method is used in three of the blocks in the architecture as will be seen later.

A first block employing the precise timing is the PPM modulator. Based on the charge integrator described above, two different timings can be generated by switching between two capacitor values using the data signal. A precise timing difference can be defined by tuning the capacitor value and the current. The circuit design is shown on figure 5.

The time difference between two pulse positions will be given by the difference in load capacitance at the integration node. That is:

$$\Delta T = T_2 - T_1 = \frac{V_{ref}(C_{par} + C_1 + C_2)}{I} - \frac{V_{ref}(C_{par} + C_2)}{I}$$

$$\Rightarrow \Delta T = \frac{V_{ref}}{I}(C_{par} + C_1)$$

In this design, C1 and Cpar (the parasitic capacitance of the transistors) are fixed in the design, so tuning the reference current can modify the time difference. Typical values for this design are:

Vref =     1V
Cpar =     200fF
C1 =       300fF
(C2 =      120fF)

In order to obtain a time difference of 10ns, a current of 50uA is required.

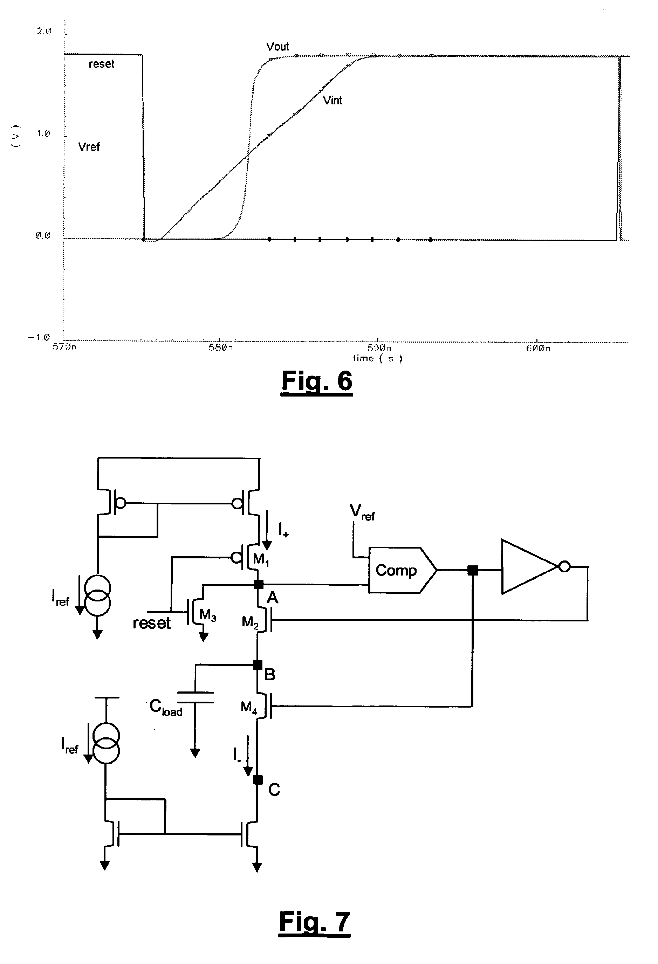

The reset node serves to bring the integration node back to zero. Once the reset signal is set to zero (failing edge), the integration node starts to rise, and once it reaches the reference voltage, it generates the output-enabling signal. The integration node however continues to charge and shuts the Pmos current source off, avoiding extra current consumption. Then, at the rising edge of the reset signal, the Nmos transistor shorts the integration node to ground, and the integration node is ready for a next integration. However, an extra Pmos transistor, controlled by the complementary of the reset signal, shuts the current source off. This is essential since the current source is directly connected to ground at that instant. The next falling edge instant releases the integration node and switches the current source back on for the next integration to occur. The essential voltages are shown on figure 6.

A second block in which the precise timing is employed in the pulse shaping circuit. It is important to shape the pulse, in order to avoid out off band emissions. Indeed, if square-wave pulses are used, the harmonics of the square envelope gives rises to unwanted lobes next to the spectrum of the signal. These lobes can be attenuated or even suppressed by applying a smooth envelope to the pulse. The way that is used here is by again employing the integration method described above. This method does not require extra special components, like step recovery diodes and does not consume much energy. The idea is to create triangle shapes by charging and discharging a capacitor. The shape can then easily be modified by playing with the charging current, the capacitor load or even with the reference voltage in the comparator. A circuit schematic is shown on figure 7.

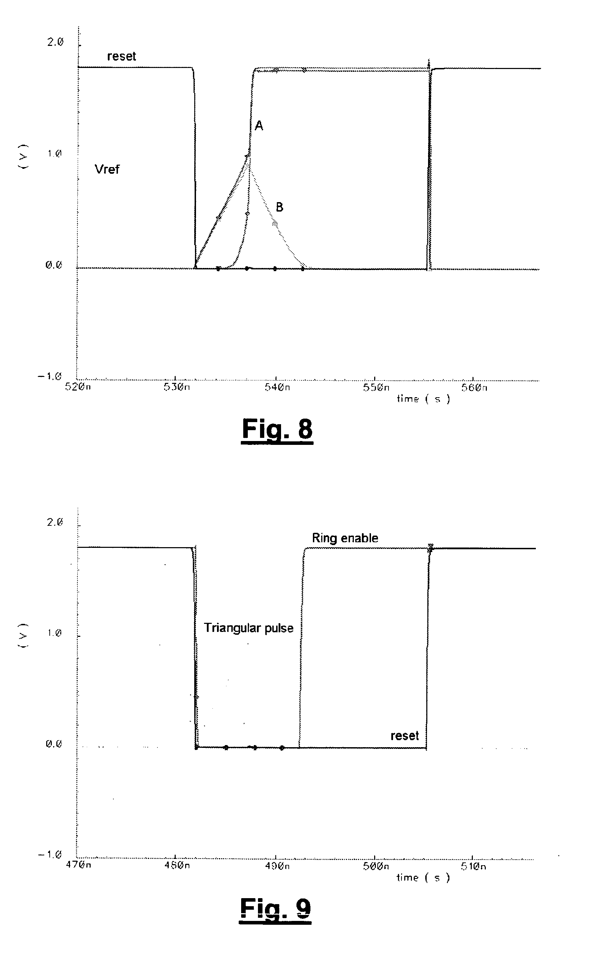

The falling edge of the reset signal let the current $I_+$ flow into the load capacitor by opening transistor $M_1$ and closing transistor $M_3$. Once the voltage at node A reaches the reference voltage, the comparator opens transistor $M_4$ and the same but inverted signal closes transistor $M_2$. The capacitor is then connected to the Nmos current source and the capacitor is discharged via the current $I_-$. The voltage at node B results from this charging discharging process producing a triangular signal. The essential signals are shown on figure 8.

Similarly to the PPM modulator, the next rising edge of the reset signal brings the voltage back to the initial state.

In order to be able to vary the pulse duration, which has the effect of varying the bandwidth of the signal, a switch capacitor array may be used as Cload. A configuration signal fixes the capacitor value of Cload. For instance a three-bit configuration signal can be used, fixing the capacitor value between 200fF and 550 fF (including the 150fF parasitic capacitance) by steps of 50fF.

The duration of the triangle can be further tuned by adapting the reference current. Since MIM capacitors are not used for compatibility with a logic process, mos capacitors have to be used. Since the voltage across the resistor ranges between 0 and 1V, Pmos transistors are used to keep the capacitor value constant in this voltage range.

A third block employing the precise timing is the ring activation circuit. The goal here is to avoid the operation of the ring when no pulses need to be created. An enabling signal must then be used and synchronized to the shaping circuit. This starting instant is easy to get since it is directly the PPM block output. However a stopping event must be created when the triangle duration is over. Since the triangle duration is tunable, using the same capacitor value as for the pulse shaping circuit and a double current value will lead to a duration equal to the triangle. A NAND operation will finally build the ring enabling signal. Figure 9 shows the resulting waveforms.

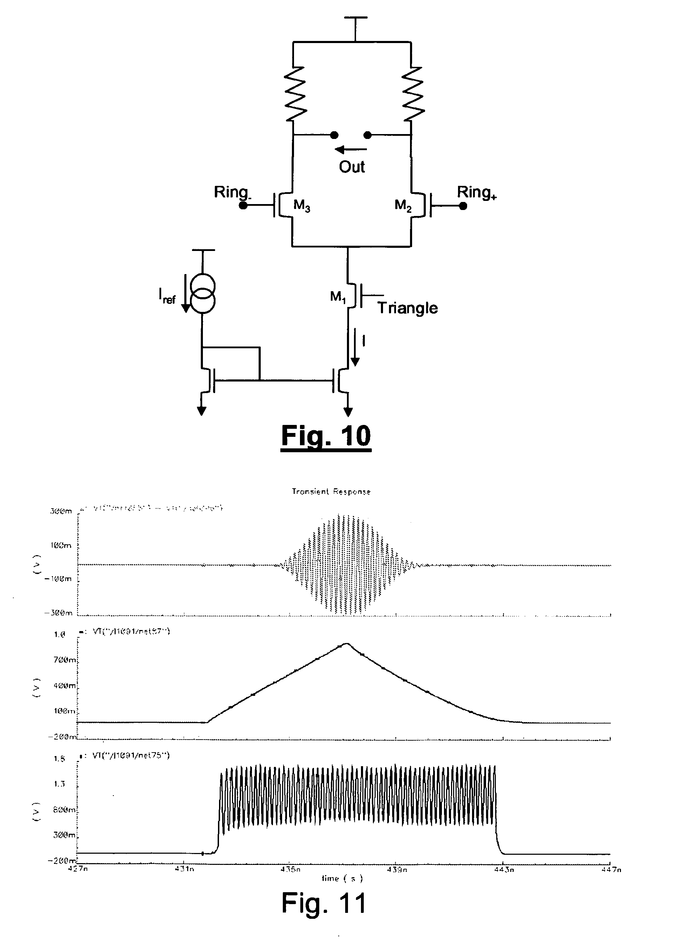

For finally obtaining the UWB communications signal, the oscillating signal is shaped by the triangles, i.e. the two are mixed. The circuit used for this operation is shown on figure 10.

The operation is similar to that of a traditional mixer. The transistor $M_1$ is controlled by the large signal triangular signal. This signal ($0 \rightarrow 1V$) modulates the tail current source following the quadratic law of a MOS transistor in its triode region. The resulting current is then flowing in either branch of the differential pair depending on the Ring oscillator differential signal. The resulting voltage at the output is an upconverted quadratic pulse shape. Of course, the single ended voltage at each side of the output contains a strong common mode signal. However, either the differential output can feed directly a differential antenna, or the output can be converted to a single ended signal by means of a balun. In order to reduce power consumption, an output buffer is avoided and the mixer is designed to feed a 50ohm load. The different signals are shown on figure 11.

As can be seen of figure 11, the pulse starts only once the triangular waveform reaches the threshold voltage $V_T$ of the transistor. This means that the ring oscillator is active during a longer period than required. Future optimization of the circuit would be to reduce the operating time of the ring oscillator.

In the following, the performance of the system is discussed.

The tunability of the frequency rang is provided by the ring oscillator. The goal to range from 3GHz to 5GHz is achieved.

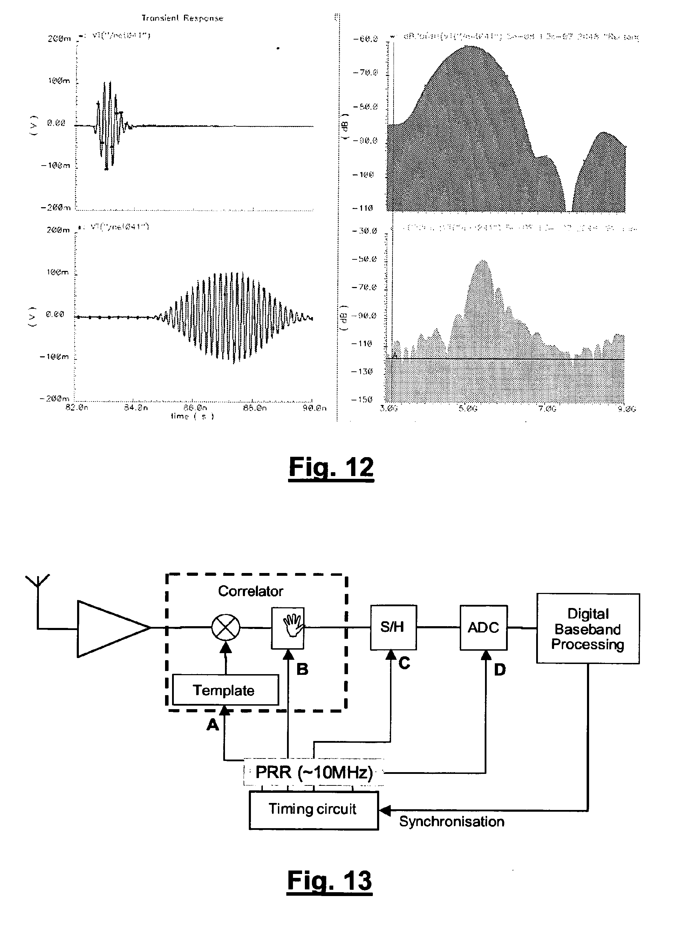

The tunability of the bandwidth is, as it was said, from 500MHz up to 2GHz. These two extreme cases are shown on figure 12. The bandwidth can be tuned to any value between these two extremes.

For the example design a maximum output power of -10dBm is obtained. This output power can be further tuned down to any lower value by either reducing the biasing current of the output buffer or by reducing the triangular peak value. Reducing the output power makes sense if the power consumption of the system is dominated by the output stage. However in this current version, 90% of the power consumption comes from the ring oscillator. Reducing the output power will help to save only a few percent of the power consumption.

The overall power consumption is 10mW during active mode and about 100uW during the sleep mode. The energy necessary to transmit one pulse is then 100pJ for the long pulses (500MHz) and 40pJ for the short pulses (2GHz).

The power consumption is divided as follows:

Pcons = 8.5mW for the ring oscillator (85%)

Pcons = 0.5mW for the control circuits (5%)

Pcons = 1mW for the mixer (10%)

For the receiver, the basic principle which is shown in figure 13 is to shift data processing to the analog domain. The basic principle is then to implement a correlation receiver in the analog domain and convert the result of the correlation to the digital to make the decision. The advantage is to allow a low frequency sampling at the ADC.

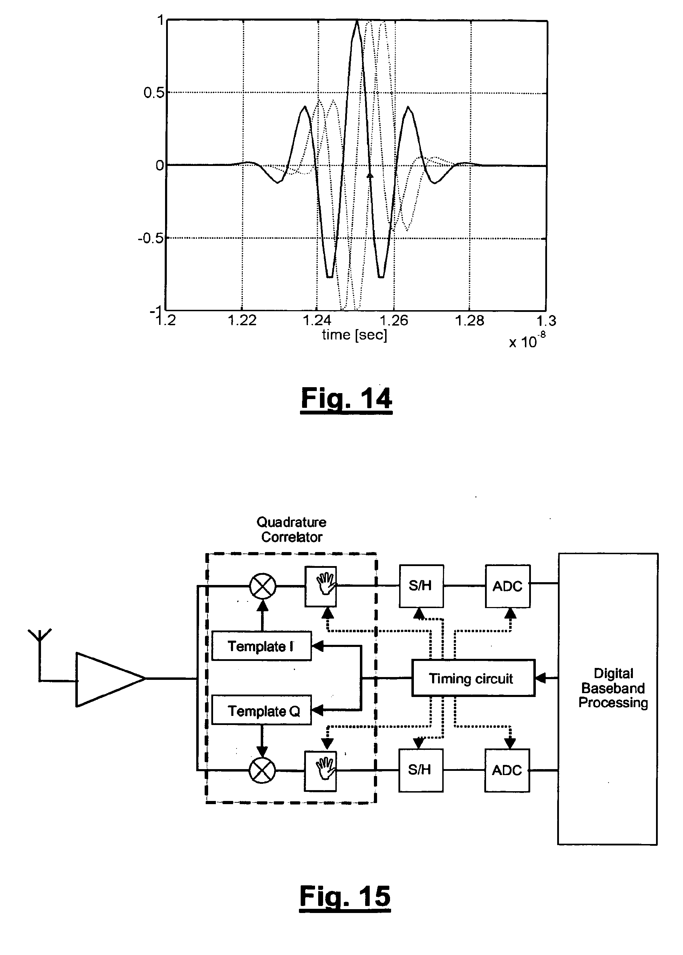

In this implementation, a strong advantage is that the accuracy on timings B C and D is not too tight since they are processing low frequency signals (ideally, the integrator output is a DC signal...). However, this architecture can be viewed as switching the high frequency timing constrains of the ADC into a precise timing for the template generation (signal A). A small drift in the template signal with respect to the received signal degrades rapidly the correlation result. For example, assuming a 5th order gaussian as incoming pulse, a drift of 35ps between the template signal and the received signal is sufficient to produce a wrong correlation value at the output. This is shown in figure 15. The first dotted curve is the received UWB signal, the second dotted curve is the template (a time-shifted version of the pulse), and the plain curve is the correlation function. The little triangle shows the correlation value for this particular time-shift.

To overcome this stringent timing constraint on the template generation timing (signal A), a correlation in quadrature can be used leading to the architecture of figure 15.

This type of reception technique shows a clear advantage if the received signal features an oscillating carrier. In that particular case, the quadrature signal is then the same pulse envelope but with a carrier in quadrature inside. Different shapes for the envelope can be used to modulate the carrier. However, the shape of the transmitted pulse will directly define the signal bandwidth. A simple square shape shows too much side-lobe power whereas a gaussian shape is complicated to generate with analog circuit. Therefore, the triangular pulse shape shows interesting advantages both in implementation simplicity and spectrum efficiency. The triangular shape is then chosen as the transmitted pulse.

The optimum receiver should ideally correlate the incoming pulse with its replica, being then the triangular pulse. However, using a square shape as a template in the receiver still shows advantages compared to a triangular pulse:

- Lower implementation complexity.
- Correlation error due to a time shift between Tx and Rx clock decreases slower with a rectangle than with a triangular shape.
- Rectangle will better capture the close distortion of the pulses due to the channel
- The loss of correlation energy with the rectangle is negligible compared to the correlation with a triangle.

In conclusion, the final architecture looks like a traditional direct downconversion receiver where the local oscillator LO is duty cycled to produce pulsed I and Q LO signals. However, a substantial difference with traditional system remains on the use of an analog integration in order to bring a low frequency signal at the ADC input.

**Claims**

1.  A method for generating an ultra-wideband communications signal, the method comprising the steps of:

 a) generating an ultra-wideband baseband signal comprising a plurality of pulses separated from each other in time, based on an inputted data signal,
 b) generating a carrier tone having a carrier frequency suitable for wireless transmission,
 c) upconverting the baseband signal with the carrier tone to the carrier frequency, thereby generating said ultra-wideband communications signal,

 **characterised in that** said ultra-wideband baseband signal is a piecewise linear ultra-wideband baseband signal wherein said pulses are triangular pulses, and **in that** step a) comprises shaping the triangular pulses in order to alternate out of band emissions,
 wherein the triangular pulses are generated by means of a timing circuit which comprises at least one capacitor, a current source supplying current to said capacitor and a comparator comparing the voltage on said at least one capacitor with a reference voltage, the comparator having an output which forms a timing signal, and a feedback of the output of said comparator which is used for discharging said at least one capacitor, the voltage on said at least one capacitor forming said triangular pulses.

2.  A method according to claim 1, **characterised in that** said pulses have a duration and that said carrier tone has a period, said duration being longer than said period.

3.  A method according to claim 1 or 2, **characterised in that** said ultra-wideband communications signal has a bandwidth of at least 500 MHz or at least 20% of the carrier frequency.

4.  A method according to any one of the claims 1-3, **characterised in that** said ultra-wideband communications signal has a centre frequency within a first range of 3-5 GHz or a second range of 6-10 GHz.

5.  A method according to claim 4, **characterised in that** said ultra-wideband communications signal has a bandwidth of maximum 2 GHz if said centre frequency is within the first range and maximum 4 GHz if said centre frequency is within the second range.

6.  A method according to any one of the claims 1-5, **characterised in that** the pulse shaping comprises the step of tuning the shape and/or bandwidth of said at least one pulse.

7.  A method according to any one of the claims 1-6, **characterised in that** the method further comprises the step of tuning the carrier tone frequency.

8.  A method according to any one of the claims 1-7, **characterised in that** said carrier tone is generated by means of an oscillator which is switched off in between two pulses.

9.  A method according to claim 8, **characterised in that** said oscillator is a ring oscillator.

10. A device for generating an ultra-wideband communications signal comprising a signal generator for generating an ultra-wideband baseband signal comprising a plurality of pulses separated from each other in time, based on an inputted data signal, an oscillator for generating a carrier tone having a frequency in the RF domain and a mixer for upconverting the baseband signal with the carrier tone to the RF domain, thereby generating said ultra-wideband communications signal, **characterised in that** said signal generator is adapted for generating a piecewise linear ultra-wideband baseband signal comprising a plurality of triangular pulses separated from each other in time, said signal generator comprising a pulse shaping circuit for shaping the triangular pulses in order to alternate out of band emissions,
 said pulse shaping circuit comprising a first timing circuit which comprises at least one capacitor, a current source for supplying current to said at least one capacitor and a comparator for comparing the voltage on said at least one capacitor with a reference voltage, the comparator having an output which forms a timing signal, and a feedback of the output of said comparator which is used for discharging said at least one capacitor, the voltage on said at least one capacitor forming said triangular pulses.

11. A device according to claim 10, **characterised in that** the signal generator comprises a pulse position modulator.

12. A device according to claim 10 or 11, **characterised in that** the oscillator is a ring oscillator.

13. A device according to any one of the claims 10-12, **characterised in that** the device comprises a second timing circuit for switching off the oscillator between two pulses.

14. A device according to claim 13, **characterised in that** said second timing circuit comprises at least one second capacitor, a second current source for supplying current to said second capacitor and a second comparator for comparing the voltage on said second capacitor with a second reference voltage, the second comparator having an output which forms a second timing signal.

15. A device according to claim 10, **characterised in that** said at least one capacitor is formed by a switch capacitor array.

**Patentansprüche**

1. Verfahren zum Erzeugen eines Ultra-Breitband-Kommunikationssignals, wobei das Verfahren die Schritte umfasst zum:

   a) Erzeugen eines Ultra-Breitband-Basisbandsignals, das basierend auf einem eingegebenen Datensignal mehrere Impulse umfasst, die voneinander zeitlich getrennt sind,
   b) Erzeugen eines Trägertons, der eine Trägerfrequenz aufweist, die für drahtlose Übertragung geeignet ist,
   c) Heraufwandeln des Basisbandsignals mit dem Trägerton auf die Trägerfrequenz, wodurch das Ultra-Breitband-Kommunikationssignal erzeugt wird,

   **dadurch gekennzeichnet, dass** das Ultra-Breitband-Basisbandsignal ein stückweise lineares Ultra-Breitband-Basisbandsignal ist, wobei die Impulse Dreieckimpulse sind, und dass der Schritt a) ein Formen der Dreieckimpulse umfasst, um Emissionen ausserhalb des Bandes zu dämpfen, wobei die Dreieckimpulse mithilfe einer Zeitgeberschaltung erzeugt werden, die mindestens einen Kondensator, eine Stromquelle, die dem Kondensator Strom zuführt, und einen Komparator umfasst, der die Spannung an dem mindestens einen Kondensator mit einer Bezugsspannung vergleicht, wobei der Komparator eine Ausgabe, die ein Zeitgebersignal ausbildet, und eine Rückkopplung der Ausgabe des Komparators aufweist, die für das Entladen des mindestens einen Kondensators verwendet wird, wobei die Spannung an dem mindestens einen Kondensators die Dreiecksimpulse ausbildet.

2. Verfahren nach Anspruch 1, **dadurch gekennzeichnet, dass** die Impulse eine Dauer aufweisen und dass der Trägerton eine Periode aufweist, wobei die Dauer länger als die Periode ist.

3. Verfahren nach Anspruch 1 oder 2, **dadurch gekennzeichnet, dass** das Ultra-Breitband-Kommunikationssignal eine Bandbreite von mindestens 500 MHz oder mindestens 20 % der Trägerfrequenz aufweist.

4. Verfahren nach einem der Ansprüche 1 - 3, **dadurch gekennzeichnet, dass** das Ultra-Breitband-Kommunikationssignal eine Mittenfrequenz in einem ersten Bereich von 3 - 5 GHz oder einem zweiten Bereich von 6 - 10 GHz aufweist.

5. Verfahren nach Anspruch 4, **dadurch gekennzeichnet, dass** das Ultra-Breitband-Kommunikationssignal eine Bandbreite von maximal 2 GHz aufweist, wenn die Mittenfrequenz im ersten Bereich liegt, und von maximal 4 GHz, wenn die Mittenfrequenz im zweiten Bereich liegt.

6. Verfahren nach einem der Ansprüche 1 - 5, **dadurch gekennzeichnet, dass** das Impulsformen den Schritt zum Abstimmen der Gestalt und/oder Bandbreite des mindestens einen Impulses umfasst.

7. Verfahren nach einem der Ansprüche 1 - 6, **dadurch gekennzeichnet, dass** das Verfahren ferner den Schritt zum Abstimmen der Trägertonfrequenz umfasst.

**8.** Verfahren nach einem der Ansprüche 1 - 7, **dadurch gekennzeichnet, dass** der Trägerton mithilfe eines Oszillators erzeugt wird, der zwischen zwei Impulsen abgeschaltet wird.

**9.** Verfahren nach Anspruch 8, **dadurch gekennzeichnet, dass** der Oszillator ein Ringoszillator ist.

**10.** Vorrichtung zum Erzeugen eines Ultra-Breitband-Kommunikationssignals mit einem Signalerzeuger zum Erzeugen eines Ultra-Breitband-Basisbandsignals, das mehrere Impulse aufweist, die voneinander zeitlich getrennt sind, basierend auf einem eingegebenen Datensignal, einem Oszillator zum Erzeugen eines Trägertons, der eine Frequenz im RF-Bereich aufweist, und einem Mischer zum Heraufwandeln des Basisbandsignals mit dem Trägerton in den RF-Bereich, wodurch das Ultra-Breitband-Kommunikationssignal erzeugt wird, **dadurch gekennzeichnet, dass** der Signalerzeuger geeignet ist zum Erzeugen eines stückweise linearen Ultra-Breitband-Basisbandsignals, das mehrere Dreieckimpulse umfasst, die voneinander zeitlich getrennt sind, wobei der Signalerzeuger eine Impulsformungsschaltung zum Formen der Dreieckimpulse aufweist, um Emissionen ausserhalb des Bandes zu dämpfen, wobei die Impulsformungsschaltung eine erste Zeitgeberschaltung aufweist, die mindestens einen Kondensator, eine Stromquelle, die dem mindestens einen Kondensator Strom zuführt, und einen Komparator umfasst, der die Spannung an dem mindestens einen Kondensator mit einer Bezugsspannung vergleicht, wobei der Komparator eine Ausgabe, die ein Zeitgebersignal ausbildet, und eine Rückkopplung der Ausgabe des Komparators aufweist, die für das Entladen des mindestens einen Kondensators verwendet wird, wobei die Spannung an dem mindestens einen Kondensator die Dreiecksimpulse ausbildet.

**11.** Vorrichtung nach Anspruch 10, **dadurch gekennzeichnet, dass** der Signalerzeuger einen Impulspositionsmodulator umfasst.

**12.** Vorrichtung nach Anspruch 10 oder 11, **dadurch gekennzeichnet, dass** der Oszillator ein Ringoszillator ist.

**13.** Vorrichtung nach einem der Ansprüche 10 - 12, **dadurch gekennzeichnet, dass** die Vorrichtung eine zweite Zeitgeberschaltung aufweist, um den Oszillator zwischen zwei Impulsen abzuschalten.

**14.** Vorrichtung nach Anspruch 13, **dadurch gekennzeichnet, dass** die zweite Zeitgeberschaltung mindestens einen zweiten Kondensator, eine zweite Stromquelle, um den zweiten Kondensator mit Strom zu versorgen, und einen zweiten Komparator umfasst, um die Spannung an dem zweiten Kondensator mit einer zweiten Bezugsspannung zu vergleichen, wobei der zweite Komparator eine Ausgabe aufweist, die ein zweites Zeitgebersignal ausbildet.

**15.** Vorrichtung nach Anspruch 10, **dadurch gekennzeichnet, dass** der mindestens eine Kondensator durch eine Schalter-Kondensator-Anordnung gebildet wird.


**Revendications**

**1.** Procédé pour générer un signal de communications à ultra large bande, le procédé comprenant les étapes consistant à :

a) générer un signal de bande de base à ultra large bande comprenant une pluralité d'impulsions séparées les unes des autres dans le temps, basé sur un signal de données entré,
b) générer une tonalité porteuse ayant une fréquence porteuse appropriée pour la transmission sans fil,
c) convertir vers le haut le signal de bande de base avec la tonalité porteuse à la fréquence porteuse, générant ainsi ledit signal de communications à bande ultra large,

**caractérisé en ce que** ledit signal de bande de base à ultra large bande est un signal de bande de base à ultra large bande linéaire par morceaux dans lequel lesdites impulsions sont des impulsions triangulaires, et **en ce que** l'étape a) comprend la formation des impulsions triangulaires afin d'atténuer des émissions hors bande, dans lequel les impulsions triangulaires sont générées au moyen d'un circuit de synchronisation qui comprend au moins un condensateur, une source de courant fournissant du courant audit condensateur et un comparateur comparant la tension sur ledit au moins un condensateur avec une tension de référence, le comparateur ayant une sortie qui forme un signal de synchronisation, et une rétroaction de la sortie dudit comparateur qui est utilisée pour décharger au moins un condensateur, la tension sur ledit au moins un condensateur formant lesdites impulsions triangulaires.

**2.** Procédé selon la revendication 1, **caractérisé en ce que** lesdites impulsions ont une durée et **en ce que** ladite tonalité porteuse a une période, ladite durée étant plus longue que ladite période.

3. Procédé selon la revendication 1 ou 2, **caractérisé en ce que** ledit signal de communications à ultra large bande a une bande passante d'au moins 500 MHz ou d'au moins 20 % de la fréquence porteuse.

4. Procédé selon l'une quelconque des revendications 1 - 3, **caractérisé en ce que** ledit signal de communications à ultra large bande a une fréquence centrale dans une première plage de 3 - 5 GHz ou une deuxième plage de 6 - 10 GHz.

5. Procédé selon la revendication 4, **caractérisé en ce que** ledit signal de communications à ultra large bande a une bande passante d'au maximum 2 GHz si ladite fréquence centrale est dans la première plage et d'au maximum 4 GHz si ladite fréquence centrale est dans la deuxième plage.

6. Procédé selon l'une quelconque des revendications 1 - 5, **caractérisé en ce que** la formation d'impulsion comprend l'étape consistant à syntoniser la forme et/ou la bande passante de ladite au moins une impulsion.

7. Procédé selon l'une quelconque des revendications 1 - 6, **caractérisé en ce que** le procédé comprend en outre l'étape de syntonisation de la fréquence de tonalité porteuse.

8. Procédé selon l'une quelconque des revendications 1 - 7, **caractérisé en ce que** ladite tonalité porteuse est générée au moyen d'un oscillateur qui est éteint entre deux impulsions.

9. Procédé selon la revendication 8, **caractérisé en ce que** ledit oscillateur est un oscillateur annulaire.

10. Dispositif pour générer un signal de communications à ultra large bande comprenant un générateur de signal pour générer un signal de bande de base à ultra large bande comprenant une pluralité d'impulsions séparées les unes des autres dans le temps, sur la base d'un signal de données entré, un oscillateur pour générer une tonalité porteuse ayant une fréquence dans le domaine RF et un mixeur pour convertir vers le haut le signal de bande de base avec la tonalité porteuse au domaine RF, générant ainsi ledit signal de communications à ultra large bande, **caractérisé en ce que** ledit générateur de signal est adapté pour générer un signal de bande de base à ultra large bande linéaire par morceaux comprenant une pluralité d'impulsions triangulaires séparées les unes des autres dans le temps, ledit générateur de signal comprenant un circuit de formation d'impulsion pour former les impulsions triangulaires afin d'atténuer des émissions hors bande, ledit circuit de formation d'impulsion comprenant un premier circuit de synchronisation qui comprend au moins un condensateur, une source de courant pour fournir du courant audit au moins un condensateur et un comparateur pour comparer la tension sur ledit au moins un condensateur avec une tension de référence, le comparateur ayant une sortie qui forme un signal de synchronisation, et une rétroaction de la sortie dudit comparateur qui est utilisé pour décharger ledit au moins un condensateur, la tension sur ledit au moins un condensateur formant lesdites impulsions triangulaires.

11. Dispositif selon la revendication 10, **caractérisé en ce que** le générateur de signal comprend un modulateur de position d'impulsion.

12. Dispositif selon la revendication 10 ou 11, **caractérisé en ce que** l'oscillateur est un oscillateur annulaire.

13. Dispositif selon l'une quelconque des revendications 10 - 12, **caractérisé en ce que** le dispositif comprend un deuxième circuit de synchronisation pour éteindre l'oscillateur entre deux impulsions.

14. Dispositif selon la revendication 13, **caractérisé en ce que** ledit deuxième circuit de synchronisation comprend au moins un deuxième condensateur, une deuxième source de courant pour fournir du courant audit deuxième condensateur et un deuxième comparateur pour comparer la tension sur ledit deuxième condensateur avec une deuxième tension de référence, le deuxième comparateur ayant une sortie qui forme un deuxième signal de synchronisation.

15. Dispositif selon la revendication 10, **caractérisé en ce que** ledit au moins un condensateur est formé par un réseau de condensateur commutation.

**Fig. 1**

**Fig. 2**

**Fig. 3**

$$T = \frac{V_{ref}C}{I}$$

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DEGIANG WANG et al.** Performance Comparison of Two Kinds of UWB Rake Receiver. *Emerging Technologies: Frontiers of Mobile and Wireless Communication, 2004, Proceedings of the IEEE 6th Circuits and Systems Symposium on Shanghai,* 31 May 2004, 329-332

- **BORYSSENKO A. et al.** Efficient and practical pulses for dipole antenna UWB link. *Antennas and Propagation Society Symposium, 2004, IEEE Monterey,* 20 June 2004, vol. 2, 1283-1286